# EUROPÄISCHE PATENTSCHRIFT

(11) **EP 0 622 525 B1**
(45) Veröffentlichungstag und Bekanntmachung des Hinweises auf die Patenterteilung: **20.03.1996**
(21) Anmeldenummer: 94106183.0
(22) Anmeldetag: 21.04.1994
(51) Int. Cl.: F01D 3/04, F01D 5/10, F01D 11/04, F04D 29/66, F04D 29/10, F16C 32/06

(54) **Bauteilanordnung mit einem radialen Spalt**
Structural elements having a radial gap
Eléments de structure avec un interstice radial

(30) Priorität: 24.04.1993 DE 4313455
(43) Veröffentlichungstag der Anmeldung: 02.11.1994
(73) Patentinhaber: KSB Aktiengesellschaft, D-67227 Frankenthal (DE)
(72) Erfinder: Bouricet, Jean Claude, F-74940 Annecy-le-Vieux (FR)

(56) Entgegenhaltungen:
- EP-A- 0 094 529
- EP-A- 0 224 764
- WO-A-91/09232
- GB-A- 1 085 386
- GB-A- 2 218 751
- US-A- 4 170 435
- US-A- 4 273 510
- US-A- 5 125 792
- TRANSACTIONS OF THE A.S.M.E., Bd.100, Oktober 1978 Seiten 533 - 543 D.V.WRIGHT 'Air model test of labyrinth seal forces on a whirling rotor'

## Beschreibung

### Technisches Gebiet

Die Erfindung betrifft eine Bauteilanordnung mit einem radialen Spalt bzw. eine Axialschub-Entlastungseinrichtung mit einer solchen Bauteilanordnung, beispielsweise einer Strömungsmaschine, angeordnet zwischen einem sich drehenden ersten Bauteil in der Art einer Welle und einem zweiten Bauteil in der Art einer Buchse, welcher an seinen Enden einem Druckgefälle in einem umgebenden Fluid ausgesetzt ist und folglich eine Hochdruckseite und eine Niederdruckseite aufweist, wobei das zweite Bauteil über dem Umfang verteilt angeordnete, voneinander unabhängige Öffnungen aufweist, über welche zwecks Verbesserung der Laufruhe des sich drehenden Bauteils ein Strom unter hohem Druck stehenden Fluids in den Spalt mündet.

### Stand der Technik

Es ist bekannt, in einer Richtung durchströmte radiale Spalte für Spaltdichtungen mit glatten Spalten, Stufenspalten oder Labyrinthspalten zu verwenden.

Derartige Spalte unterliegen alle denselben Gegebenheiten. Eine Druckdifferenz im Fluid an den Enden des Spaltes bewirkt einen von der Spaltweite abhängigen Spaltstrom in axialer Richtung. Der axialen Durchströmung des Spaltes überlagert sich wegen des sich drehenden ersten Bauteils eine Rotationsströmung. Da der durchströmte Spalt als Drosselspalt wirkt, in welchem sich der Druck des Fluids verringert, ist der Spalt heftigen hydraulischen Einflüssen unterworfen.

Diese Einflüsse machen den Spalt zum Verursacher von Instabilitäten an der Welle, insbesondere von Schwingungen in radialer Richtung, welche die Laufruhe der Welle beeinträchtigen. Man ist daher gezwungen, in größtmöglicher Nähe des Spalts Lager vorzusehen, die die störenden Instabilitäten, insbesondere Schwingungen, aufnehmen.

Weiterhin wird ein in axialer Richtung durchströmter radialer Spalt bei Axialschub-Entlastungseinrichtungen von Strömungsmaschinen zur Beherrschung des Axialschubes verwendet. Diese Entlastungseinrichtungen können aus einem in einer Buchse geführten Entlastungskolben (Europump, Teil 2.1, Fig. 11c, 12) bestehen. Daneben sind aus einer Kombination von Entlastungskolben und Entlastungsscheibe bestehende Entlastungseinrichtungen bekannt (Europump, Teil 2.1, Fig. 29b).

Nachteilig ist hierbei, daß der mit der Welle verbundene Teil der Entlastungseinrichtung die Masse der Welle erhöht, wodurch die Laufruhe weiter verschlechtert wird.

Zur Behebung dieses Nachteils ist aus der EP-B 0 224 764 bekannt, die Buchse einer Entlastungseinrichtung mit Kanälen zu versehen. Der dem Spalt über die Kanäle zugeführte Strom teilt sich in zwei Strömungsrichtungen auf: in eine Rückströmung in den Radseitenraum als Sperrstrom und in den eigentlichen Entlastungsstrom von den Kanälen zur Niederdruckseite. Durch den Sperrstrom soll eine vorrotationsfreie Entlastungsströmung erzielt werden, welche allein durch die Verminderung der Rotation im Spalt die Neigung des Pumpenrotors zu Eigenschwingungen im Grenzlastbereich verringert.

Durch diese Konstruktion wird aber die Entlastungseinrichtung noch länger und ihre Masse gegenüber den bekannten Entlastungseinrichtungen weiter vergrößert.

### Darstellung der Erfindung

Der Erfindung liegt die Aufgabe zugrunde, die von einem durchströmten Spalt einer Bauteilanordnung hervorgerufenen Instabilitäten zu verringern und die Laufruhe eines sich drehenden Bauteils zu erhöhen.

Nach der Erfindung sind die Öffnungen so angeordnet, daß der über die Öffnungen zugeführte Strom als Stabilisierungsstrom sich zu einem von der Hochdruckseite zu der Niederdruckseite strömenden Spaltstrom addiert und der Druck im Stabilisierungsstrom so gewählt ist, daß beide Ströme ausschließlich auf der Niederdruckseite aus dem Spalt austreten.

Die durch die Erfindung hervorgerufene lokale Druckerhöhung im Spalt an der Stelle der Einmündung bewirkt eine Stabilisierung der Welle und verringert die Schwingungen. Die Welle wird mit einfachen Mitteln in einer zentralen Lage gehalten.

Eine erfindungsgemäß weitergebildete Axialschub-Entlastungseinrichtung hat den Vorteil, daß die Einrichtung selbst ein Element zur Verbesserung der Laufruhe und zur Stabilisierung der weiteren Einflüssen ausgesetzten Welle ist. Die Verbesserung der Laufruhe ermöglicht es, die Leistung der Strömungsmaschine trotz erhöhter Masse der sich drehenden Bauteile zu erhöhen.

Der Stabilisierungsstrom besteht aus außerhalb des Radseitenraums in einem Bereich erhöhten Druckes gegenüber dem Druck im Spalt an der Stelle der Einmündung der Kanäle abgezweigtem Fluid, um eine Vorrotation im Stabilisierungsstrom zu vermeiden.

Gute Ergebnisse werden mit im mittleren Bereich des Spaltes einmündenden Öffnungen erzielt. Zweckmäßigerweise sind die Öffnungen als Radialbohrungen ausgeführt. Der Herstellungsaufwand ist gering.

Die Abzweigung des Stabilisierungstroms kann in einfacher Weise aus dem Druckgehäuse oder dem Druckstutzen vorgenommen werden.

Weitere Ausgestaltungen sehen die Anordnung der Öffnung in einer oder mehrerer Ebenen vor. Je nach Länge des Spaltes kann die Stabilisierungswirkung durch mehrere Öffnungsebenen verstärkt werden.

Eine erfindungsgemäße Axialschub-Entlastungseinrichtung läßt sich in Hochdruckkreiselpumpen vorteilhaft einsetzen.

### Kurze Beschreibung der Zeichnung

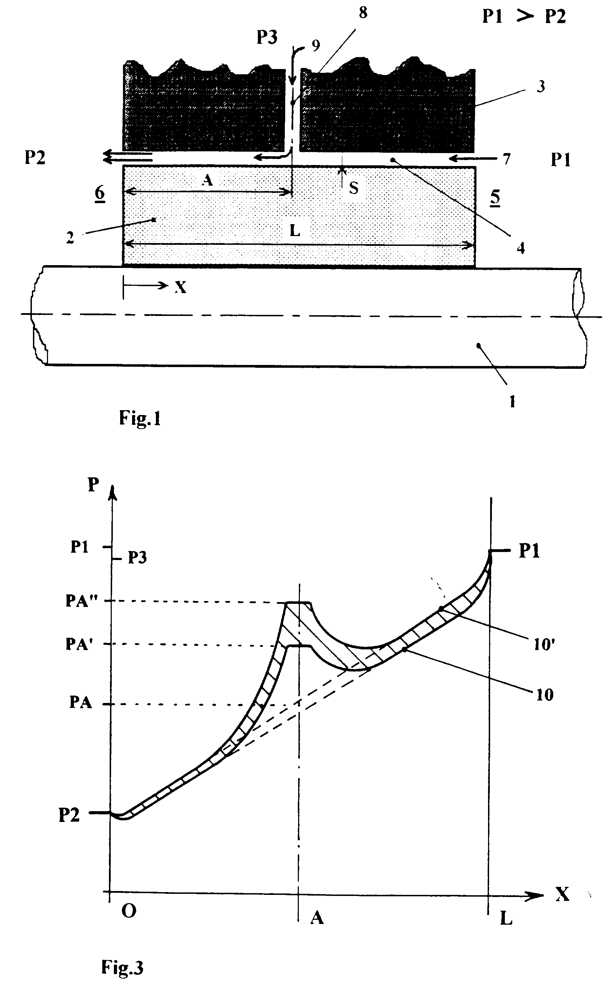

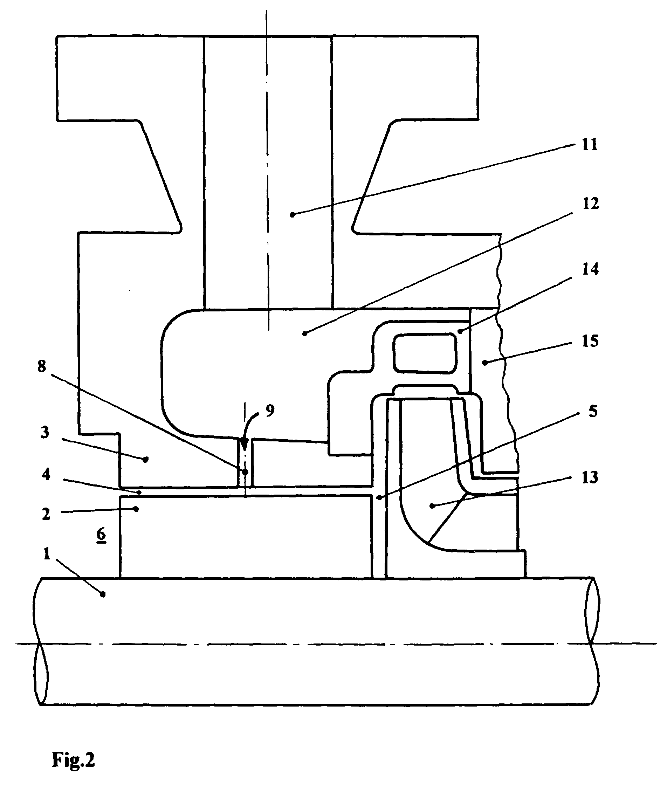

Ein Ausführungsbeispiel der Erfindung ist in der Zeichnung dargestellt und wird im folgenden näher beschrieben. Es zeigen die
- Fig. 1: den Spalt einer Axialschub-Entlastungseinrichtung im Längsschnitt, die
- Fig. 2: eine mehrstufige Kreiselpumpe mit einer erfindungsgemäßen Stabilisierungseinrichtung, die
- Fig. 3: den stark vereinfachten qualitativ angenäherten Druckverlauf im Spalt, die

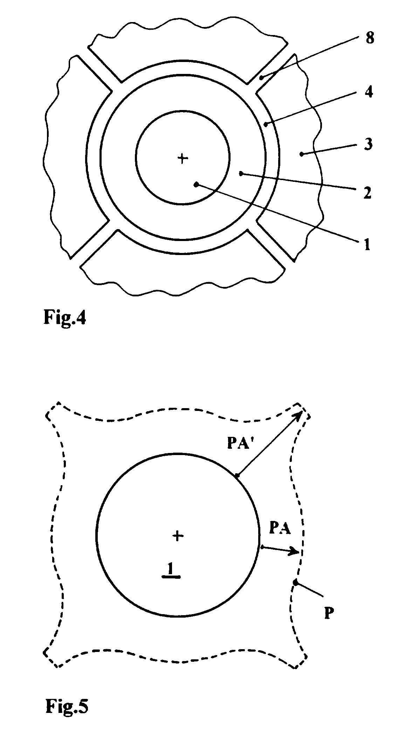

- Fig. 4: einen Querschnitt durch eine erfindungsgemäße Einrichtung im Bereich der Öffnungen, die
- Fig. 5: die Druckverteilung über den Umfang des Spaltes.

### Weg zur Ausführung der Erfindung

Die Erfindung wird anhand einer Axialschub-Entlastungseinrichtung einer Strömungsmaschine erläutert. Grundsätzlich treten die hier beschriebenen Verhältnisse aber in jedem Drosselspalt auf, bei dem sich ein Bauteil in einen anderen dreht.

Auf einer Welle 1 eines Läufers befindet sich ein mit dieser drehfest verbundener und axial fixierter Entlastungskolben 2. Der Entlastungskolben 2 dreht sich in einer Buchse 3. Zwischen diesen befindet sich ein Spalt 4 der Länge L mit einer Spaltweite S. Der Spalt 4 wird von einem Ende hohen Druckes P₁, Hochdruckseite 5 genannt, zu einem Ende niedrigen Druckes P₂, Niederdruckseite 6 genannt, hin von Fluid durchströmt. Durch den Pfeil auf der Hochdruckseite 5 ist ein rotationsfreier, rein axialer Spaltstrom 7 dargestellt, der tatsächlich aber wegen der Rotation der Welle 1 eine Komponente in Umfangsrichtung aufweist. Bei Kreiselpumpen wird der Spaltstrom 7 im allgemeinen aus dem Radseitenraum als Hochdruckseite 5 entnommen und bis auf den Druck am Pumpeneintritt als Niederdruckseite 6 entspannt.

Die Buchse 3 ist mit mehreren, über den Umfang verteilt angeordneten Öffnungen versehen, von denen eine Öffnung 8 dargestellt ist. Die Öffnungen liegen in einer Ebene senkrecht zur Mittelachse der Welle und sind voneinander unabhängig. Die Öffnung 8 mündet in axialem Abstand A zur Niederdruckseite 6 in den Spalt 4. Durch die Öffnung 8 fließt ein unter dem Druck P₃ stehender Stabilisierungsstrom 9 in den Spalt 4. Der Stabilisierungsstrom 9 teilt sich zwar im Spalt 4 in verschiedene Richtungen auf, er ist aber so gehalten, daß er nicht in der Lage ist, auf der Hochdruckseite 5 auszutreten. Eine Rückströmung auf die Hochdruckseite 5 findet nicht statt. Vielmehr addiert sich der Stabilisierungsstrom 9 zu dem Spaltstrom 7, so daß das Fluid ausschließlich auf der Niederdruckseite 6 austritt.

In Fig. 2 ist die Anordnung der Entlastungseinrichtung in einer mehrstufigen Kreiselpumpe dargestellt. Der Entlastungskolben 2 ist seitlich vom Laufrad 13 und der Leiteinrichtung 14 angeordnet. Die Kreiselpumpe weist mehrere Stufengehäuse 15 auf. Der Stabilisierungsstrom 9 wird außerhalb des Radseitenraumes im Druckbereich entnommen, z. B. direkt aus einem Druckstutzen 11 oder einem vorgeschalteten Druckgehäuse 12.

In Fig. 3 ist ein stark vereinfachter, qualitativ angenäherter Verlauf des Druckes im Spalt 4 entlang einer Achse x dargestellt. Für x = 0 liegt im Spalt 4 eine Druck P₂, also der Druck der Niederdruckseite 6, an. Für x = L liegt im Spalt ein Druck P₁, also der Druck der Hochdruckseite 5, an. Die Annahme einer linearen Drosselung im Spalt 4 ergibt die Druckgerade 10 durch die Punkte (L/P₁) und (0/P₂). An der Stelle x = A ist ohne die erfindungsgemäße Lehre ein Druck P_{A} zu erwarten. Der durch die Öffnung 8 mit dem Druck P₃ einströmende Stabilisierungsstrom 9 bewirkt jedoch eine Druckerhöhung auf den Druck P_{A}' > P_{A} an der Stelle x = A. Der Druck P₃ wird in alle Richtungen abgebaut und fällt auf die Druckgerade 10 ab.

Verläßt die Welle 1 ihre Mittellage und verringert sich dadurch auf einer Seite die Spaltweite S auf S', so steigt auf dieser Seite der Druck P_{A}' auf P_{A}" an. Auch die Druckgerade 10 ändert sich mit veränderter Spaltweite so, daß der Druck bei sich verengendem Spalt ansteigt und eine Druckgerade 10' entsteht. Da sich auf der gegenüberliegenden Seite die Spaltweite vergrößert, fällt dort der Druck unter P_{A}' ab und es entsteht eine aus der schraffierten Fläche ableitbare Rückstellkraft, welche die Welle 1 wieder in ihre Mittellage bringt.

Wie in Fig. 4 dargestellt, liegen die Öffnungen 8 der Buchse 3 in einer Ebene und münden voneinander unabhängig in den Spalt 4.

In der Fig. 5 ist die Druckverteilung einer sich in einer Mittellage befindlichen Welle 1 dargestellt. Über den Umfang des Spaltes 4 liegt außer im Bereich der Öffnungen 8 der Druck P_{A} an. Im Bereich der Öffnungen erhöht sich der Druck P_{A} auf den Druck P_{A}', der jedoch kleiner als der Druck P₃ in dem Stabilisierungsstrom 7 bleibt. Es läßt sich erkennen, daß zwischen den lokalen Druckerhöhungen Bereiche mit einem dem normalen Drosselspalt entsprechenden Druck P_{A} liegen, so daß durch den Stabilisierungsstrom 9 keine Sperrwirkung für den Spaltstrom 4 erzielt wird.

Grundsätzlich ist es auch möglich, den Spalt mit mehreren über die axiale Länge verteilt angeordneten Öffnungsebenen zu versehen. Bei dieser Ausführung sind dann für die verschiedenen Öffnungsebenen Stabilisierungsströme unterschiedlichen Drucks vorteilhaft.

### Gewerbliche Anwendbarkeit

Die Erfindung läßt sich bei Strömungsmaschinen im allgemeinen und Pumpen im besonderen anwenden.

## Patentansprüche

1. Bauteilanordnung mit einem radialen Spalt (4), beispielsweise einer Strömungsmaschine, angeordnet zwischen einem sich drehenden ersten Bauteil in der Art einer Welle (1) und einem zweiten Bauteil in der Art einer Buchse (3), welcher an seinen Enden einem Druckgefälle in einem umgebenden Fluid ausgesetzt ist und folglich eine Hochdruckseite (5) und eine Niederdruckseite (6) aufweist, wobei das zweite Bauteil über dem Umfang verteilt angeordnete, voneinander unabhängige Öffnungen (8) aufweist, über welche zwecks Verbesserung der Laufruhe des sich drehenden Bauteils ein Strom unter hohem Druck stehenden Fluids in den Spalt (4) mündet, **dadurch gekennzeichnet**, daß die Öffnungen (8) so angeordnet sind, daß der über die Öffnungen (8) zugeführte Strom als Stabilisierungsstrom (9) sich zu einem von der Hochdruckseite (5) zu der Niederdruckseite (6) strömenden Spaltstrom (7) addiert und der Druck im Stabilisierungsstrom (9) so gewählt ist, daß beide Ströme ausschließlich auf der Niederdruckseite (6) aus dem Spalt (4) austreten.

2. Bauteilanordnung nach Anspruch 1, dadurch gekennzeichnet, daß die Öffnungen (8) in der Buchse (3) so angeordnet sind, daß sie in einen mittleren Bereich des Spaltes (4) einmünden.

3. Bauteilanordnung nach einem der Ansprüche 1 bis 2, dadurch gekennzeichnet, daß die Öffnungen (8) in der Buchse (3) gleichmäßig über den Umfang verteilte Radialbohrungen sind.

4. Bauteilanordnung nach einem der Ansprüche 1 bis 3, dadurch gekennzeichnet, daß die Öffnungen (8) in einer Ebene senkrecht zur Mittelachse der Welle (1) liegen.

5. Bauteilanorndung nach einem der Ansprüche 1 bis 4, dadurch gekennzeichnet, daß die Öffnungen (8) in mehreren Ebenen senkrecht zur Mittelachse der Welle (1) mit axialem Abstand zueinander liegen.

6. Axialschub-Entlastungseinrichtung einer Strömungsmaschine mit einer Bauteilanordnung nach einem der Ansprüche 1 bis 5, bei welcher das erste Bauteil aus einem sich mit einer Welle (1) drehenden Entlastungselement mit zumindest einem Abschnitt in Form eines Kolbens (2) und das zweite Bauteil aus einer feststehenden Buchse (3) besteht, dadurch gekennzeichnet, daß durch den Spalt (4) ein Entlastungsstrom (7) vom Radseitenraum eines Laufrades als Hochdruckbereich (5) in einen Niederdruckbereich als Niederdruckseite (6) fließt.

7. Axialschub-Entlastungseinrichtung nach Anspruch 6, dadurch gekennzeichnet, daß der Stabilisierungsstrom (9) außerhalb des Radseitenraumes aus einem Bereich mit gegenüber dem unbeeinflußten Druck im Spalt (4) an der Stelle (A) der Einmündung der Öffnungen (8) erhöhtem Druck abgezweigt ist.

8. Axialschub-Entlastungsvorrichtung nach einem der Ansprüche 6 bis 7, dadurch gekennzeichnet, daß der Strom (9) aus einem Druckgehäuse (12) oder einem Druckstutzen (11) der Strömungsmaschine abgezweigt wird.

9. Axialschub-Entlastungseinrichtung nach einem der Ansprüche 6 bis 8, dadurch gekennzeichnet, daß eine Kreiselpumpe ab 200 m Förderhöhe damit versehen ist.

## Claims

1. A component arrangement defining a radial gap (4), for instance of a fluid flow machine, arranged between a rotating first component resembling a shaft (1) and a second element resembling a bushing (3), which gap is subject to a pressure gradient at its ends in a surrounding fluid and consequently possesses a high pressure side (5) and a low pressure side (6), the second component possessing openings (8), which are independent of one another and are distributed about the periphery, through which openings, for the purpose of improving the smooth running properties of the rotating component, a flow under a high pressure emerges into the gap (4), characterized in that the openings (8) are so placed that the flow supplied through the openings (8) is added as a stabilizing flow (9) to a gap flow (7) flowing from the high pressure side (5) to the low pressure side (6) and the pressure in the stabilizing flow (9) is so selected that both flows emerge exclusively at the low pressure side (6) from the gap (4).

2. The component arrangement as claimed in claim 1, characterized in that the openings (8) in the bushing (3) are so arranged that they open into a central region of the gap (4).

3. The component arrangement as claimed in claim 1 or in claim 2, characterized in that the openings (8) in the bushing (3) are radial holes evenly distributed about the periphery.

4. The component arrangement as claimed in any one of the claims 1 through 3, characterized in that the openings (8) lie in a plane perpendicular to the central axis of the shaft (1).

5. The component arrangement as claimed in any one of the claims 1 through 4, characterized in that the openings (8) are arranged in a plurality of planes perpendicular to the central axis of the shaft (1) with a mutual axial spacing from each other.

6. An axial thrust balancinq device of a fluid flow motor comprising a component arrangement as claimed in any one of the claims 1 through 5, in the case of which the first component comprises a relieving element, rotating with a shaft (1) and having at least one section in the form of a piston (2) and the second component comprises a stationary bushing (3), characterized in that a relief flow (7) flows through the gap (4) from the impeller side space of an impeller as a high pressure region (5) into a low pressure region as a low pressure side (6).

7. The axial thrust balancing device as claimed in claim 6, characterized in that the stabilizing flow (9) is branched off outside the impeller side space from a region with a pressure increased above the unaffected pressure in the gap (4) at the point (A) of emergence from the openings (8).

8. The axial thrust balancinq device as claimed in either of the claims 6 and 7, characterized in that the flow (9) is branched from a pressure housing (12) or a pressure connection means (11) of the fluid flow machine.

9. The axial thrust balancing device as claimed in any one of the claims 6 through 8, characterized in that a centrifugal pump with a head of 200 m. upward is provided with it.

## Revendications

1. Disposition d'éléments de construction avec une fente radiale (4), d'une turbo machine par ex., positionnée entre un premier élément de construction rotatif du type d'un arbre (1) et un second élément de construction du type d'une douille (3), la fente étant soumise à ses extrêmités à une chute de pression dans un fluide qui l'entoure et présente, en conséquence, un côté de haute pression (5) et un côté de basse pression (6), dans lequel le deuxième élément de construction présente des ouvertures (8) réparties sur sa circonférence, placées indépendament les unes des autres et à travers desquelles un courant d'un fluide soumise à une haute pression débouche dans la fente (4) afin d'améliorer la tranquilité de fonctionnement de l'élément de construction rotatif, **caractérisé** en ce que les ouvertures (8) sont placées de telle manière que le courant conduit à travers les ouvertures (8), en tant que courant de stabilisation (9), s'additionne au courant de fente (7) passant du côté de haute pression (5) au côté de basse pression (6) et en ce que la pression dans le courant de stabilisation (9) est choisi de telle manière que les deux courants sortent uniquement de la fente (4) par le côté de basse pression (6).

2. Disposition d'éléments de construction selon la revendication 1, caractérisée en ce que les ouvertures (8) dans la douille (3) sont placées de telle manière qu'elles débouchent dans une zone centrale de la fente (4).

3. Disposition d'éléments de construction selon les revendications 1 à 2, caractérisée en ce que les ouvertures (8) dans la douille (3) sont des alésages radiaux répartis régulièrement sur la circonférence.

4. Disposition d'éléments de construction selon l'une des revendications 1 à 3, caractérisée par le fait que les ouvertures (8) sont situées dans un plan perpendiculaire à l'axe médian de l'arbre (1).

5. Disposition d'éléments de construction selon l'une des revendications 1 à 4, caractérisée par le fait que les ouvertures (8) sont situées les unes par rapport aux autres à écart axial, dans plusieurs plans perpendiculaires à l'axe médian de l'arbre (1).

6. Dispositif d'équilibrage de la poussée axiale d'une turbo machine avec une disposition des éléments de construction selon l'une des revendications 1 à 5 dans lequel le premier élément de construction comprend un élément d'équilibrage tournant avec l'arbre (1) avec au moins une section de la forme d'un piston (2) et le second élément de construction est une douille fixe (3), caractérisé en ce qu'un courant d'équilibrage (7) traverse la fente (4) de la chambre latérale de la roue en tant que zone de haute pression (5) dans une zone de basse pression en tant que côté de basse pression (6).

7. Dispositif d'équilibrage de la poussée axiale selon la revendication 6, caractérisé en ce que le courant de stabilisation (9) est dévié à l'extérieur de la chambre latérale de la roue, hors d'une zone avec une pression plus élevée par rapport à la pression non influencée dans la fente (4) à l'endroit (A) du débouché des ouvertures (8).

8. Dispositif d'équilibrage de la poussée axiale selon les revendications 6 à 7, caractérisé en ce que le courant (9) est dévié hors d'un corps de refoulement (12) ou d'un tuyau de pression (11) de la turbo machine.

9. Dispositif d'équilibrage de la poussée axiale selon l'une des revendications 6 à 8, caractérisé en ce qu'une pompe centrifuge en est équipée à partir d'une hauteur de refoulement de 200 m.
